# EUROPÄISCHE PATENTSCHRIFT

(11) **EP 0 763 446 B1**
(45) Veröffentlichungstag und Bekanntmachung des Hinweises auf die Patenterteilung: **22.12.1999**
(21) Anmeldenummer: 96113969.8
(22) Anmeldetag: 31.08.1996
(51) Int. Cl.: B60R 13/02, B60J 3/02

(54) **Dachverkleidungselement für Fahrzeuge**
Roof cladding element for vehicles
Elément de revêtement de toit pour véhicules

(30) Priorität: 13.09.1995 DE 19533897
(43) Veröffentlichungstag der Anmeldung: 19.03.1997
(73) Patentinhaber: Johnson Controls Interiors GmbH, 42285 Wuppertal (DE)
(72) Erfinder: Viertel, Lothar, 66802 Altforweiler (DE); Welter, Patrick, 57720 La Chambre (FR)

(56) Entgegenhaltungen:
- EP-A- 0 638 449
- DE-A- 2 744 594
- FR-A- 2 676 403
- US-A- 4 690 450
- US-A- 5 417 466

## Beschreibung

Die Erfindung bezieht sich auf ein Dachverkleidungselement für Fahrzeuge, welches an den fahrzeuginnenseitigen Dachbereich, der an die Windschutzscheibe angrenzt, anordbar ist und welches mit Sonnenblenden bestückt ist.

Die Ausrüstung eines Dachverkleidungselements mit Sonnenblenden ist an sich bekannt. Die dabei zum Einsatz kommenden Sonnenblenden sind in der Regel sichtbehindernd und weisen einen relativ komplizierten Aufbau auf.

Die US-A-5 417 466 zeigt z.B. ein Dachverkleidungselement gemäß dem Oberbegriff des Anspruchs 1.

Der vorliegenden Erfindung liegt die Aufgabe zugrunde, ein Dachverkleidungselement für Fahrzeuge mit integrierten Sonnenblenden zur Verfügung zu stellen, wobei die Sonnenblenden einen ausreichenden Sichtschutz bieten, kostengünstig herzustellen und am Dachverkleidungselement anbringbar, gewichtsreduziert und in ihrer Gebrauchslage nicht sichtbehindernd ausgebildet sein sollen. Darüber hinaus wird ein ansprechendes Design angestrebt.

Diese Aufgabe wird gemäß der Erfindung mit den Merkmalen des Anspruchs 1 gelöst.

Die Unteransprüche geben weitere Ausgestaltungen und zweckmäßige Weiterbildungen der Erfindung an.

Ein Ausführungsbeispiel der Erfindung wird im folgenden anhand der Zeichnungen näher erläutert, und es zeigen:
- Fig. 1: ein Dachverkleidungselement mit zwei Sonnenblenden, in einer Explosivdarstellung,

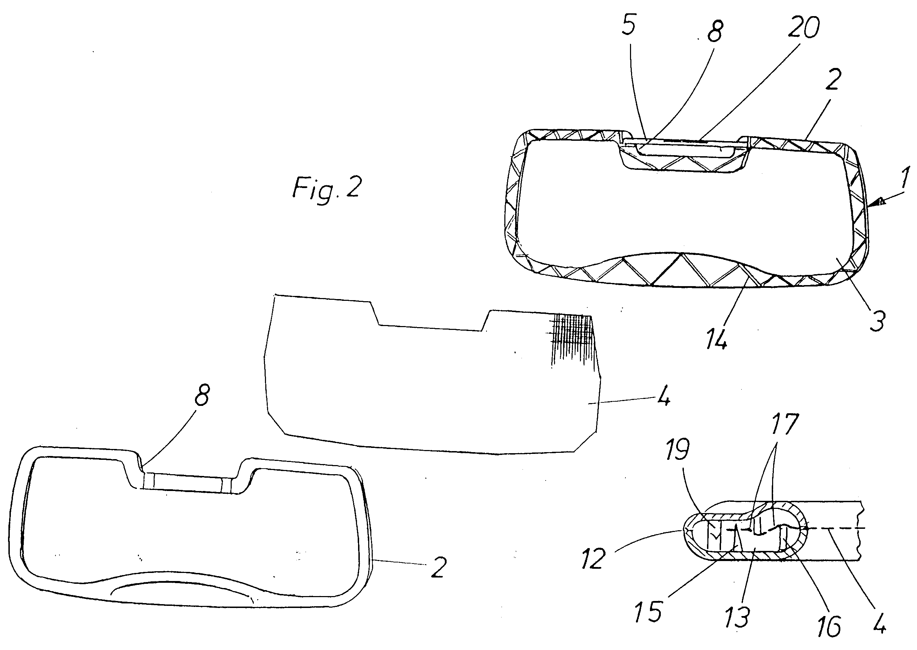

- Fig. 2: den Aufbau einer Sonnenblende in einer Explosivdarstellung,

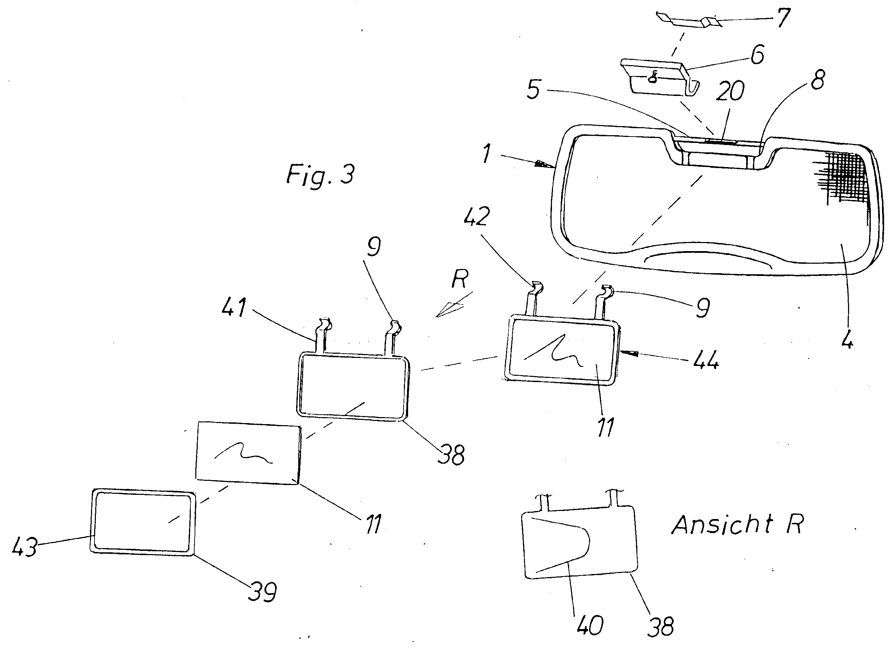

- Fig. 3: die Explosivdarstellung einer Sonnenblende mit Spiegelanordnung,

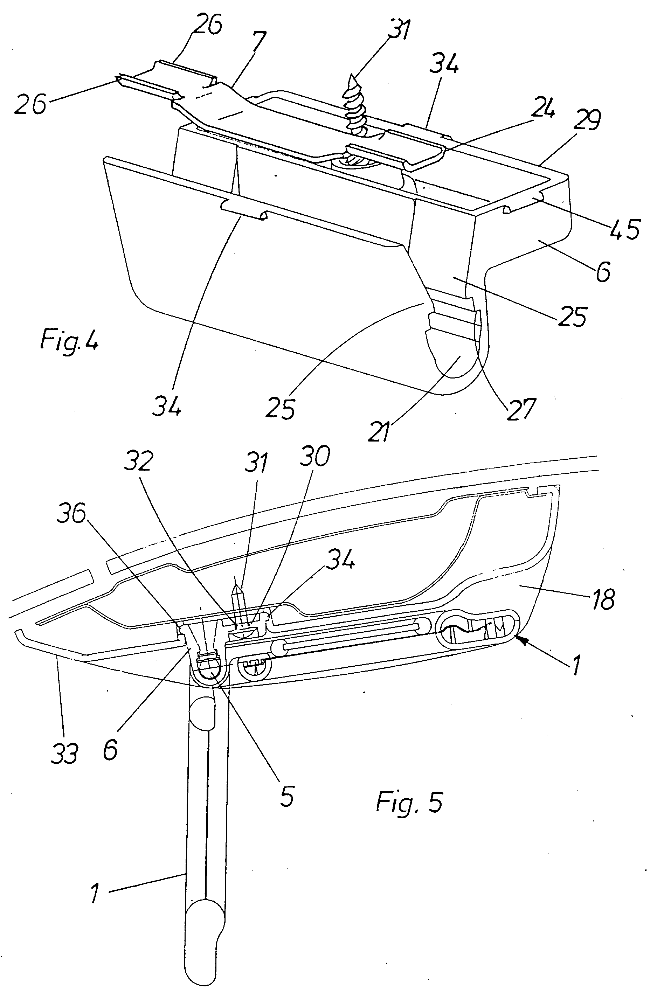

- Fig. 4: ein Lagerböckchen für eine Sonnenblende und
- Fig. 5: eine Seitenansicht des montierten Dachverkleidungselements mit Sonnenblende.

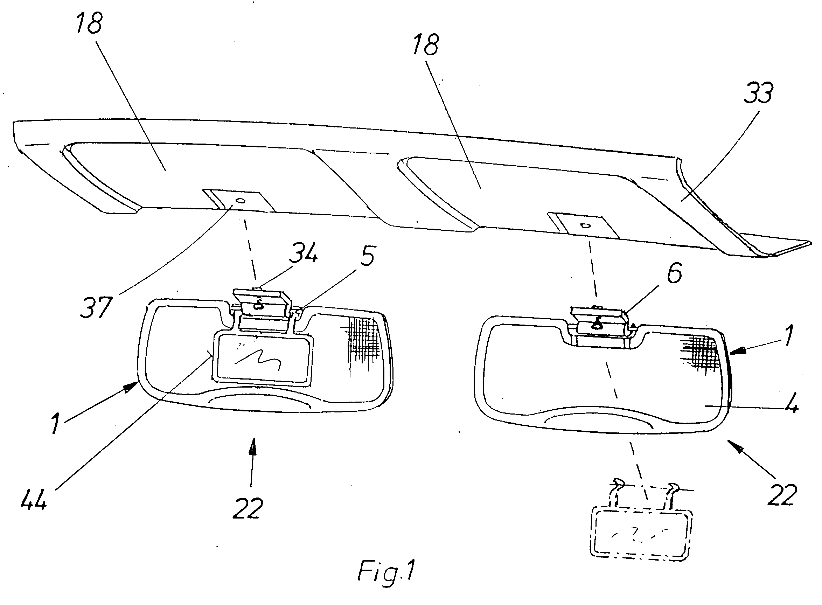

Fig. 1 zeigt ein vorgefertigtes Dachverkleidungssystem 33, das mit vormontierten Sonnenblenden 22 eine montagefertige Einbaueinheit bildet.

Der Sonnenblendenkörper 1 wird durch einen umlaufenden PP(Polypropylen)-Spritzgußrahmen 2 gebildet, wobei das freie Mittel-/Innenfeld 3 des Spritzgußrahmens 2 mit z. B. einer perforierten Bespannung 4 ausgefüllt wird. Im speziellen Fall ist ein Polyestergewirke vorgesehen mit einer Lichtdurchlässigkeit von max. 15 %. Denkbar sind aber auch transparente oder eingefärbte Folien, Textilien, Leder, kaschierte Pappen oder Vliese.

Die integrierte Achse 5 am Spritzgußrahmen 2 dient zur Aufnahme/Positionierung eines Lagerböckchens 6, in dem eine Blattfeder 7 für ein Klapp-/Rastmoment montiert ist. Die Sonnenblende ist so ausgeführt, daß sie sowohl auf der linken bzw. rechten Fahrzeugseite als Gleichteil eingesetzt werden kann.

Der Außenkonturverlauf des Spritzgußrahmens 2 im Bereich der Achse 5 ist so festgelegt, daß die Lager 9 eines Spiegelgehäuses 10 inklusive Spiegel 11 an der Achse 5 aufgeklipst werden können und drehbar gelagert sind. Die Bestückung kann serienmäßig oder aber auch als Option erfolgen in Form einer Nachrüstmöglichkeit.

Der Sonnenblendenkörper 1 wird aus einem PP-Spritzgußrahmen 2 beliebiger Farbe/Oberfläche gebildet, der entweder zweiteilig (zwei Schalen) oder - wenn es die Formgebung erlaubt - einteilig ist, wobei dann die Spritzgußrahmenhälften mittels eines Filmscharniers 12 örtlich miteinander verbunden sind.

Der innere Hohlbereich 13 des Spritzgußrahmens 2 ist aus Stabilitätsgründen mit Rippen 14 versehen und darüber hinaus mit Aufnahmedomen 15 und Stegen 16, wobei letztere eine Schikane 17 bilden, um die Bespannung 4 zunächst zu fixieren bzw. aufzunehmen. Die endgültige Festlegung der Bespannung erfolgt beim Zusammenfügen der Spritzgußschalen.

Im oberen Bereich des Spritzgußrahmens 2 ist eine Achse 5 angeordnet, die entweder integriert ist als separates Spritzteil eingefügt wird. Zu diesem Zweck können achsendig Abflachungen vorgesehen sein mit einem Durchgangsloch, in die rahmenseitig angebrachte Kunststoff-Zapfen eintreten, die nach dem Zusammenfügen des Rahmens 2 ebenso ultraverschweißt werden wie die örtlich ausgebildeten Schweißzonen 19 am Spritzgußrahmen 2.

Die Achse 5 hat mittig eine Rastfläche 20, die dazu dient, im Zusammenspiel mit der Blattfeder 7 ein Rastmoment zu erzeugen und ebenso eine Vorspannung, damit der Sonnenblendenkörper 1 eine gute Himmelanlage hat. Darüber hinaus bewirkt die Blattfeder 7 in Abstimmung mit dem Achsdurchmesser ein entsprechendes Klappmoment.

Das Lagerböckchen 6 hat einen U-förmigen Achsaufnahmebereich 21. Dieser umschlingt die Achse nach dem Aufdrücken auf dieselbe halbkreisförmig. Die Blattfeder 7 wird in den Achsaufnahmebereich 21 eingedrückt in der Art, daß die an der Blattfeder 7 endseitig ausgebildeten örtlichen Abrundungen 24 über die innenseitig angebrachten Rastnasen 25 im Achsaufnahmebereich 21 gedrückt werden. Hochstehende Blechkanten 26 gleiten über den Hinterschnitt 27 und schnappen hinter den Rastnasen 25 ein. Die Blattfeder 7 ist nun positioniert und erzeugt durch ihre Formgebung, Dicke, Härte und Kombination mit der Achse 5 die entsprechenden Momente. Das Lagerböckchen 6 hat einen Befestigungsflansch 29 mit einem Befestigungs-/Durchgangsloch 30. Bevorzugterweise ist vorgesehen, daß eine Befestigungsschraube 31 mit zum Lieferumfang gehört, d. h. die Befestigungsschraube 31 ist vormontiert in der Art, daß ein entsprechend dünner Kunststoffilm 32 am Durchgangsloch 30 vorgesehen ist, an dem die Schraube 31 vorfixiert wird. Für eine bevorzugte Vormontagemöglichkeit am Dachverkleidungselement 33 hat der Befestigungsflansch 29 des Lagerböckchens 6 Erhöhungen 34 bzw. Klipszungen, die in die maßlich vorgegebene und abgestimmten Öffnungen 36 in der Vertiefung 37 der Dachverkleidung 33 eingedrückt werden. Die komplette Sonnenblende ist nun vormontiert. Nun kann je nach Disposition der Spiegel montiert werden. Dieser ist wie folgt im Aufbau:

Die Spiegelumhüllung besteht aus PP-Spritzgußrahmenhälften. Dabei kann ein unterer Rahmen 38 und ein oberer Rahmen 39 mit einem Filmscharnier verbunden sein. An dem unteren Rahmen 38 sind zwei Haltearme 41 links und rechts ausgebildet mit an den Enden vorgesehenen schalenartigen Lagern 9. Diese sind maßlich mit der Achse 5 so ausgelegt, daß sie mit dem Öffnungsmaul 42 eine Klipsung bewirken, die Achse 5 umschlingen und selbsthemmend drehbar gelagert sind.

Der untere Rahmen 38 ist rückseitig flächig geschlossen und kann zum Deponieren von Parktickets oder dgl. eine Kunststoffklammer 40 ausgebildet haben. Ebenso nimmt der untere Rahmen 38 den Spiegel 11 positionierend auf.

Der obere Rahmen 39 hat ein Spiegelfenster 43 und wird nach der Montage des Spiegels 11 eingeklappt und mit dem unteren Rahmen 38 durch entsprechend gestaltete Verklipsungen verbunden. Alternativ kann auch eine Ultraschallverschweißung diese Verbindung herstellen. Als weitere Möglichkeit kann in Erwägung gezogen werden, den Spiegel zu Umspritzen, so daß die manuellen Bearbeitungs-bzw. Montagevorgänge entfallen können.

Der komplette Spiegel 44 wird nun, wie oben erwähnt an die Achse 5 montiert und hat seine Ruhestellung in Anlage am Dachverkleidungselement 33, wobei eine leichte Verriegelung die in Form eines Hinterschnitts 45 am seitlichen Flanschfuß 29 des Lagerböckchens 6 und einer federnden Zunge am Haltearm herbeigeführt wird und somit eine Fixierung des Spiegels bewirkt.

Der Spiegel 44 ist so dimensioniert und ausgebildet, daß er sich in dem Freibereich 13 des Sonnenblendenkörpers 1 einbetten kann, und zwar in hochgeklapptem Zustand des Sonnenblendenkörpers oder umgekehrt, wenn die Sonnenblende in Funktionsstellung ist kann der Spiegel 44 vor die Sonnenblende, d. h. in den Freibereich 13 eingeklappt werden.

## Patentansprüche

1. Dachverkleidungselement für Fahrzeuge, welches an den fahrzeuginnenseitigen Dachbereich, der an die Windschutzscheibe angrenzt, anordbar ist und welches mit Spiegelbaueinheiten (44) aufweisenden Sonnenblenden bestückt ist, wobei
- das Dachverkleidungselement (33) eine erste und eine zweite muldenartige Vertiefung (18) für die Aufnahme eines ersten und eines zweiten Sonnenblendenkörpers (1) aufweist,
- innerhalb der ersten und der zweiten muldenartigen Vertiefung (18) jeweils eine weitere Vertiefung (37) zur Aufnahme je eines Lagerböckchens (6) ausgebildet ist, das eine Lageraufnahme (24) für eine sich parallel zur Längskante des Sonnenblendenkörpers (1) erstreckende Achse (5) aufweist, derart, daß jeder Sonnenblendenkorper (1) aus der muldenartigen Vertiefung (18) im Dachverkleidungselement (33) heraus in eine einen Lichtschutz bietende Gebrauchslage klappbar ist, dadurch gekennzeichnet, daß
- jeder Sonnenblendenkörper (1) im mittleren Bereich einer Längskante eine den geraden Verlauf der Längskante unterbrechende Ausnehmung (8) aufweist,
- jede Ausnehmung (8) durch die sich parallel zur benachbarten Längskante des Sonnenblendenkörpers (1) erstreckende Achse (5) überbrückt ist,
- jede Achse (5) in die Lageraufnahme (21) der Lagerböckchen (6) nach Art einer Klipsverbindung eingreift,
- jede Achse (5) in der jeweiligen Lageraufnahme (21) durch jeweils eine an jedem Lagerböckchen (6) befestigte Blattfeder (7) beaufschlagt und gesichert ist,
- an jeder Achse (5) Lagerschalen (9, 42) eingehängt und gehalten sind, die jeweils Bestandteile der Spiegelbaueinheiten (44) sind, von denen jeweils eine einem der Sonnenblendenkörper (1) zugeordnet ist und wobei nach dem Ausklappen des Sonnenblendenkörpers (1) in seine Gebrauchsstellung
- auch jede Spiegelbaueinheit (44) in eine einen Einblick in das Spiegelfeld ermöglichende Gebrauchslage überführbar ist.

2. Dachverkleidungselement nach Anspruch 1 mit zwei Sonnenblendenkörpern (1), die jeweils aus einem peripherischen Rahmen (2) und einer von diesem gehaltenen Bespannung (4) bestehen.

3. Dachverkleidungselement nach Anspruch 2, dadurch gekennzeichnet, daß die Bespannung (4) lichtdurchlässig ist, und zwar bis zu einem Bereich von 10 - 15 % durch Perforation oder Einfärben eines transparenten Folienmaterials.

4. Dachverkleidungselement mit zwei Lagerböckchen nach Anspruch 1, dadurch gekennzeichnet, daß jedes Lagerböckchen (6) eine Lagerschale und einen Befestigungsflansch (29) mit daran angeformten Rastnasen (45) zur Verrastung mit dem Dachverkleidungselement (33) aufweist.

## Claims

1. Roof lining element which is intended for vehicles, can be arranged on that roof region inside the vehicle which is adjacent to the windscreen, and is provided with sun visors which have mirror assemblies (44), it being the case that
- the roof lining element (33) has a first and a second trough-like depression (18) for receiving a first and a second sun-visor body (1),
- formed within the first and the second trough-like depression (18) is in each case a further depression (37) for receiving in each case one bearing support (6), which has a bearing mount (21) for a spindle (5) extending parallel to the longitudinal edge of the sun-visor body (1), such that each sun-visor body (1) can be swung, out of the trough-like depression (18) in the roof lining element (33), into a use position, in which protection against light is provided, characterized in that
- each sun-visor body (1) has, in the central region of a longitudinal edge, a cut-out (8) which interrupts the rectilinear progression of the longitudinal edge,
- each cut-out (8) is bridged by the spindle (5), which extends parallel to the adjacent longitudinal edge of the sun-visor body (1),
- each spindle (5) engages in the bearing mount (21) of the bearing support (6) in the manner of a clip connection,
- in each case one leaf spring (7) fastened on each bearing support (6) acts on and secures each spindle (5) in the respective bearing mount (21),
- fitted and retained on each spindle (5) are bearing shells (9, 42) which are each constituent parts of the mirror assemblies (44), of which in each case one is assigned to one of the sun-visor bodies (1), and it being the case that, once the sun-visor body (1) has been swung out into its use position, it is also possible for each mirror assembly (44) to be transferred into a use position, in which it is possible to look into the mirror surface area.

2. Roof lining element according to Claim 1 with two sun-visor bodies (1) which each comprise a peripheral frame (2) and a covering (4) retained by the latter.

3. Roof lining element according to Claim 2, characterized in that the covering (4) is translucent, to be precise up to 10-15% by perforation or by colouring a transparent sheet material.

4. Roof lining element with two bearing supports according to Claim 1, characterized in that each bearing support (6) has a bearing shell and a fastening flange (29) with latching noses (45) integrally formed thereon for the purpose of latching to the roof lining element (33).

## Revendications

1. Elément de revêtement de toit pour véhicules, qui peut être monté dans la zone du toit adjacente au pare-brise, du côté intérieur du véhicule, et qui est pourvu de pare-soleil présentant des unités de miroir (44), dans lequel
- l'élément de revêtement de toit (33) présente un premier et un deuxième renfoncements (18) en forme d'auge destinés à recevoir un premier et un deuxième corps de pare-soleil (1),
- à l'intérieur du premier et du deuxième renfoncements (18) en forme d'auge, est formé à chaque fois un autre renfoncement (37) pour recevoir respectivement un petit bloc de fixation (6) qui présente un évidement de palier (21) pour un axe (5) s'étendant parallèlement au bord longitudinal du corps de pare-soleil (1), de telle sorte que chaque corps de pare-soleil (1) puisse être ouvert par abaissement hors du renfoncement (18) en forme d'auge dans l'élément de revêtement de toit (33) dans une position d'utilisation offrant une protection contre la lumière, caractérisé en ce que
- chaque corps de pare-soleil (1) présente, au milieu d'un bord longitudinal, un évidement (8) interrompant le profil continu du bord longitudinal,
- chaque évidement (8) est ponté par l'axe (5) s'étendant parallèlement au bord longitudinal voisin du corps de pare-soleil (1),
- chaque axe (5) vient en prise dans l'évidement de palier (21) des petits blocs de fixation (6) à la manière d'un raccordement par clipsage,
- chaque axe (5) dans l'évidement de palier (21) respectif est sollicité et immobilisé par un ressort à lames (7) respectif fixé sur chaque petit bloc de fixation (6),
- sur chaque axe (5), des coquilles de palier (9, 42) sont suspendues et retenues, lesquelles sont des composants respectifs des unités de miroir (44), auxquelles à chaque fois un des corps de pare-soleil (1) est affecté, et où, après l'ouverture par abaissement du corps de pare-soleil (1) dans sa position d'utilisation, chaque unité de miroir (44) est également transférable dans une position d'utilisation permettant de voir dans le champ du miroir.

2. Elément de revêtement de toit selon la revendication 1, comportant deux corps de pare-soleil (1) qui se composent chacun d'un cadre périphérique (2) et d'un élément tendu (4) maintenu par celui-ci.

3. Elément de revêtement de toit selon la revendication 2, caractérisé en ce que l'élément tendu (4) est transparent, et ce jusqu'à un degré de 10 à 15%, par perforation ou coloration d'un matériau en feuille transparent.

4. Elément de revêtement de toit comprenant deux petits blocs de fixation selon la revendication 1, caractérisé en ce que chaque petit bloc de fixation (6) présente une coquille de palier et une bride de fixation (29) avec des nez d'encliquetage (45) formés sur celle-ci, pour s'encliqueter avec l'élément de revêtement de toit (33).
